# NEUE EUROPÄISCHE PATENTSCHRIFT

(11) **EP 2 016 319 B2**
(45) Veröffentlichungstag und Bekanntmachung des Hinweises auf die Entscheidung über den Einspruch: **08.07.2020**
(45) Hinweis auf die Patenterteilung: 23.03.2011
(21) Anmeldenummer: 07723761.8
(22) Anmeldetag: 29.03.2007
(51) Int. Cl.: F16K 31/06, H01F 7/14

(54) **VENTIL MIT EINEM ELEKTROMAGNETISCHEN ANTRIEB**
VALVE WITH AN ELECTROMAGNETIC DRIVE
SOUPAPE AVEC MÉCANISME ÉLECTROMAGNÉTIQUE

(30) Priorität: 27.04.2006 DE 202006006825 U
(43) Veröffentlichungstag der Anmeldung: 21.01.2009
(73) Patentinhaber: Bürkert Werke GmbH & Co. KG, 74653 Ingelfingen (DE)
(72) Erfinder: SCHEIBE, Ralf, 74653 Künzelsau (DE)
(74) Vertreter: Prinz & Partner mbB
(86) Internationale Anmeldenummer: PCT/EP2007/002819
(87) Internationale Veröffentlichungsnummer: WO 2007/124826

(56) Entgegenhaltungen:
- EP-A- 1 172 592
- EP-A1- 1 371 888
- EP-A1- 1 477 715
- EP-A2- 0 260 065
- EP-A2- 0 741 248
- WO-A1-00/60261
- WO-A1-2004/113713
- WO-A1-2006/018934
- DE-A1- 2 458 516
- DE-A1- 10 018 114
- DE-A1- 10 340 941
- DE-U1- 29 905 883
- US-A- 2 550 297
- US-A1- 2002 190 825
- US-B2- 6 550 745
- Kallenbach et al: "Elektromagnete - Grundlagen, Berechnung, Entwurf und Anwendung. 2. Auflage", 2003, Teubner Verlag Stuttgart
- Produktblatt, Bürkert Ventil Typ 6650
- Technische Zeichnung, Bürkert Ventil Typ 6144

## Beschreibung

Die Erfindung betrifft ein Ventil mit einem elektromagnetischen Antrieb.

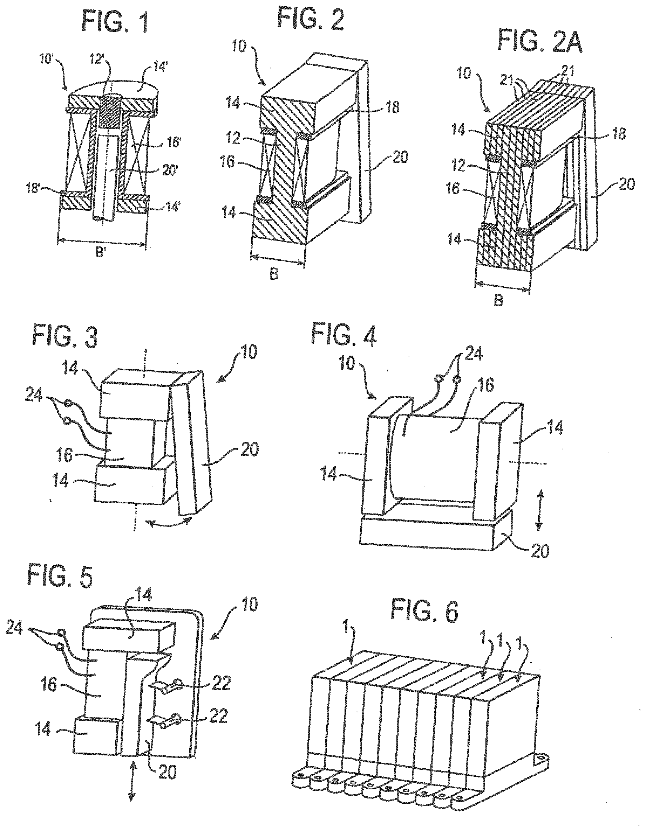

Auf dem Markt besteht zunehmend Nachfrage nach immer kleineren Ventilen. Durch die kleineren Abmaße verringert sich jedoch das Bauvolumen und somit die Leistung, die im Ventil umgesetzt werden kann. Die maximale mechanische Leistung einer Magnetspule beispielsweise ist von vielen Faktoren abhängig, insbesondere aber vom Bauvolumen und dem unterzubringenden Verhältnis der Kupferwicklungen und des Eisenquerschnitts in der Spule. Figur 1 zeigt einen elektromagnetischen Antrieb 10' zur Verwendung in einem Ventil gemäß dem Stand der Technik. Der Antrieb 10' umfaßt einen Kern 12', zwei Polstücke 14' sowie eine Wicklung 16', die auf die Wandung eines Spulenkörpers 18' aufgebracht ist. Ein Teil des Kerns ist als beweglicher Hubanker 20' ausgebildet und im Inneren des Spulenkörpers 18' mit Abstand zu diesem angeordnet. Die das Baumaß des zugehörigen Ventils bestimmende Dimension ist in der Figur mit B' bezeichnet.

US 2002/0190825 A1 offenbart einen elektromagnetischen Antrieb, bei dem eine Spule auf eine metallische Betätigerröhre gewickelt ist. Der Betätiger bzw. der Anker ist als Hubanker ausgeführt und bewegt sich innerhalb der Betätigerröhre.

EP 1 172 592 A2 offenbart einen elektromagnetischen Antrieb, bei dem eine Spule direkt auf ein Ventilgehäuse gewickelt ist. Ein Klappanker ist innerhalb der Wicklungen der Spule angeordnet.

Die Erfindung schafft ein Ventil mit einem elektromagnetischen Antrieb, das sich gegenüber dem Stand der Technik durch ein besonders geringes Baumaß bei hoher Leistung des Antriebs auszeichnet. Die Aufgabe wird durch den Gegenstand der Ansprüche 1 und 8 gelöst.

Durch diese Ausgestaltung bleibt bei gegenüber dem Stand der Technik gleichen Außenabmessungen des Ventils mehr Platz für die Wicklung. So können mehr Spulenwindungen untergebracht und eine größere Durchflutung und damit größere Magnetkraft bei gleichem Baumaß erreicht werden. Im Umkehrschluß läßt sich bei gegenüber dem Stand der Technik gleichbleibender Leistung des elektromagnetischen Antriebs das Baumaß des Ventils verringern.

Vorzugsweise sind die Polstücke einteilig mit dem Kern ausgebildet.

Aus Kostengründen ist es wünschenswert, den Kern und die Polstücke anstelle von Ferrit aus herkömmlichem Eisen auszubilden, wobei dann zur Vermeidung von Wirbelstromverlusten der Kern und die Polstücke aus geschichteten Blechen (d.h. "geblecht") ausgeführt sind.

Gemäß einer bevorzugten Ausführungsform überragen die Polstücke die Wicklung, und der Antrieb umfaßt ferner einen Anker, der mit den Polstücken zusammenwirkt. Der Anker ist außerhalb der Wicklung angeordnet, wodurch der zum Bewegen des Ankers notwendige Luftspalt (bei einem im Inneren der Wicklung angeordneten Anker) entfallen kann. Dadurch wird das Baumaß weiter verringert. Natürlich kann auch der Anker aus geschichteten Blechen ausgeführt sein.

Eine besonders platzsparende Ausgestaltung ergibt sich, wenn der Anker in Richtung einer anderen Dimension als derjenigen, die das Baumaß des Ventils bestimmt, neben dem umwickelten Kern angeordnet ist.

Der Anker kann ein Klappanker, ein Plattenanker oder ein Hubanker sein, der jeweils außerhalb der Wicklung angeordnet und bezüglich dieser so positioniert ist, daß er das Baumaß des Ventils nicht vergrößert. Im Falle eines Hubankers ist dieser z.B. mit einer Parallelogrammaufhängung versehen.

Gemäß einem zweiten Aspekt der Erfindung ist ein Ventil mit einem elektromagnetischen Antrieb vorgesehen, der mehrere durch ein Joch verbundene parallele Kerne aufweist, auf denen jeweils eine Wicklung aufgebracht ist, die zumindest in Richtung einer das Baumaß des Ventils bestimmenden Dimension ohne zwischengefügte Spulenkörperwand auf dem Kern aufliegt. Ein Anker ist außerhalb der Wicklungen angeordnet. Wiederum läßt sich durch den Verzicht auf die Spulenkörperwand das Baumaß des Ventils verringern bzw. der für die Wicklung zur Verfügung stehende Raum vergrößern.

Vorzugsweise bilden die Kerne an ihrem dem Joch gegenüberliegenden, freien Ende je ein Polstück, mit dem ein Anker des Antriebs zusammenwirkt. Der Anker ist wiederum vorteilhaft so angeordnet, daß er nicht in das auf eine bestimmte Dimension bezogene Baumaß des Ventils eingeht.

Der Anker kann ein Klappanker oder ein Plattenanker sein, der mit den als Polstücken ausgebildeten freien Enden der Kerne zusammenwirkt.

Wieder ist aus Kostengründen vorzugsweise zumindest der Kern aus geschichteten Blechen ausgeführt.

Weitere Merkmale und Vorteile der Erfindung ergeben sich aus der nachfolgenden Beschreibung mehrerer bevorzugter Ausführungsformen anhand der beigefügten Zeichnung. In dieser zeigt:
- Figur 1 eine Perspektivansicht eines elektromagnetischen Antriebs für ein Ventil gemäß dem Stand der Technik, teilweise im Schnitt;
- Figur 2 eine Perspektivansicht eines elektromagnetischen Antriebs, wie er bei einem erfindungsgemäßen Ventil zu Einsatz kommt, teilweise im Schnitt;
- Figur 2A eine Perspektivansicht eines gegenüber Figur 2 abgewandelten elektromagnetischen Antriebs für ein erfindungsgemäßes Ventil, teilweise im Schnitt;
- Figur 3 eine Perspektivansicht eines elektromagnetischen Antriebs mit Klappanker für ein erfindungsgemäßes Ventil;
- Figur 4 eine Perspektivansicht eines elektromagnetischen Antriebs mit Plattenanker für ein erfindungsgemäßes Ventil;
- Figur 5 eine Perspektivansicht eines elektromagnetischen Antriebs mit Hubanker für ein erfindungsgemäßes Ventil;
- Figur 6 eine Perspektivansicht mehrerer erfindungsgemäßer Ventile in angereihtem Aufbau;
- Figur 7 eine Schnittansicht eines erfindungsgemäßen Ventils mit einem elektromagnetischen Antrieb gemäß Figur 3;
- Figur 8 eine Schnittansicht eines erfindungsgemäßen Ventils mit einem elektromagnetischen Antrieb gemäß Figur 5;
- Figur 9 eine Schnittansicht eines erfindungsgemäßen Ventils mit einem elektromagnetischen Antrieb gemäß Figur 4;
- Figur 10 eine Schnittansicht eines gegenüber Figur 9 leicht abgewandelten erfindungsgemäßen Ventils;
- Figur 11 eine Schnittansicht eines erfindungsgemäßen Ventils in alternativer Ausführung, dessen elektromagnetischer Antrieb einen Klappanker aufweist; und
- Figur 12 eine Schnittansicht eines weiteren erfindungsgemäßen Ventils ähnlich Figur 11.

Figur 2 zeigt schematisch einen elektromagnetischen Antrieb 10 für ein erfindungsgemäßes Ventil, bei dem es sich insbesondere um ein schmales Ventil mit einem Baumaß ≤ 5 mm, vorzugsweise etwa 4,5 mm, handelt. Der Antrieb 10 hat einen Kern 12, der zwischen zwei Polstücken 14 angeordnet und einteilig mit diesen ausgebildet ist. Auf dem Kern 12 ist eine Wicklung 16 aufgebracht, die aus einer Vielzahl von Kupferwindungen gebildet ist. Weiterhin ist ein Spulenkörper 18 vorgesehen, der zwischen der Wicklung 16 und den Polstücken 14 angeordnet ist, jedoch im Unterschied zum Stand der Technik zumindest in Richtung einer das Baumaß des Ventils bestimmenden Dimension B keine Wand zwischen dem Kern 12 und der Wicklung 16 aufweist. Die Polstücke 14 überragen die Wicklung 16 und wirken mit einem Anker 20 zusammen, der so zu den Polstücken 14 angeordnet ist, daß er das Baumaß des Ventils in der Dimension B nicht vergrößert. Abweichend von der in Figur 2 gezeigten Darstellung kann der Spulenkörper 18 auch vollständig entfallen.

In Figur 2A ist eine bevorzugte Variante des elektromagnetischen Antriebs 10 dargestellt, die sich von der bisher beschriebenen dadurch unterscheidet, daß der Kern 12, die Polstücke 14 sowie der Anker 20 aus geschichteten Blechen 21 ausgeführt sind, die in Richtung der Dimension B nebeneinander angeordnet sind.

Die Figuren 3 bis 5 zeigen unterschiedliche Ausführungen des elektromagnetischen Antriebs 10, wobei der Anker 20 alternativ als Klappanker (Figur 3), als Plattenanker (Figur 4) oder als außerhalb der Wicklung 16 angeordneter Hubanker mit Parallelogrammaufhängung 22 (Figur 5) ausgebildet ist. Mit 24 sind die elektrischen Anschlüsse der Wicklung 16 bezeichnet. Abweichend von der gezeigten Darstellung können wiederum der Kern 12, die Polstücke 14 und/oder der Anker 20 geblecht ausgeführt sein.

Durch die gezeigten Antriebe 10 lassen sich Ventile besonders flach bzw. schmal ausführen und eignen sich daher besonders zum platzsparenden, angereihten Aufbau, z.B. für Anwendungen mit Mikrotiterplatten. Dabei kommen Ventile mit einem Baumaß < 9 mm bei sogenannten 96-well-plates zum Einsatz, Ventile mit einem Baumaß ≤ 4,5 mm können in 384-well-plates verwendet werden. Ein solcher angereihter Aufbau von Ventilen 1 ist in Figur 6 gezeigt.

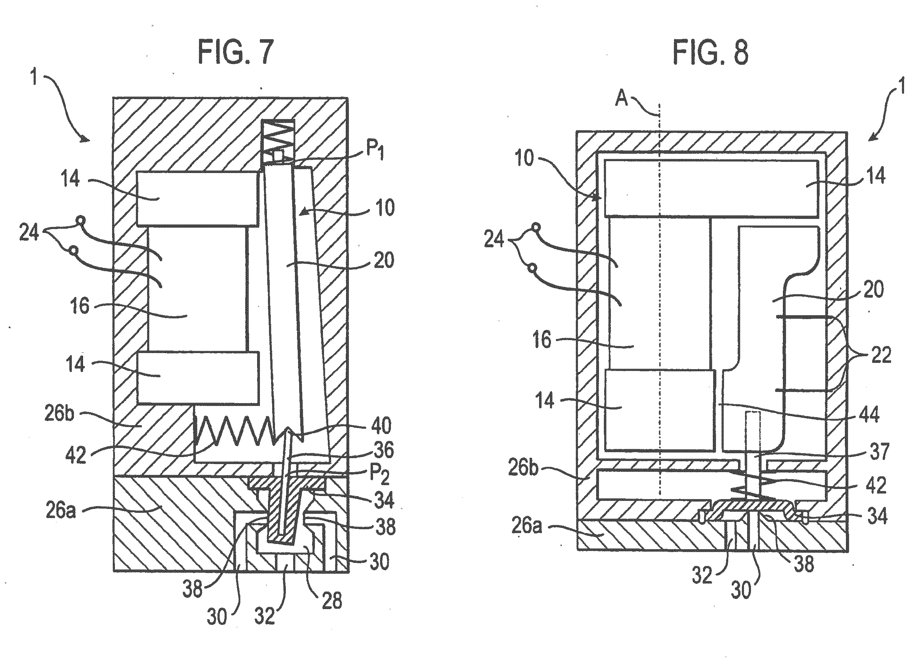

Figur 7 zeigt ein erfindungsgemäßes Ventil 1, das in einer Dimension senkrecht zur Zeichenebene ein Baumaß von 4,5 mm aufweist. Das Ventil 1 hat ein zweiteiliges Gehäuse 26a, 26b, wobei im ersten Gehäuseteil 26a ein Ventilraum 28 und im zweiten Gehäuseteil 26b ein elektromagnetischer Antrieb 10 gemäß Figur 3 angeordnet ist. In den Ventilraum 28 münden insgesamt drei Strömungskanäle für ein fluides Medium, von denen zwei als Einlaßkanäle 30 und einer als Auslaßkanal 32 ausgebildet ist. Zwischen den Gehäuseteilen 26a, 26b ist ein Dichtkörper 34 aus elastischem Material eingespannt, der den Ventilraum 28 gegenüber dem Antrieb 10 hermetisch abdichtet und so für eine Medientrennung sorgt.

In den Dichtkörper 34 ist ein zweiarmiger Betätigungshebel 36 eingelassen, dessen in der Figur unterer Arm je einen Schließkörper für die an den Einlaßkanälen 30 vorgesehenen Ventilsitze 38 bildet. Der obere Arm wird vom Antrieb 10 betätigt und ist zu diesem Zweck über ein Schneidenlager 40 direkt mit dem Anker 20 des Antriebs 10 verbunden, der bei Betätigung des Antriebs 10 um einen Lagerpunkt P₁ schwenkt. Der Betätigungshebel 36 führt dabei eine Schwenkbewegung um einen Lagerpunkt P₂ aus. Ferner ist ein Federelement 42 vorgesehen, das den Betätigungshebel 36 in eine definierte Endlage bringt. Eine Justage des Ventils 1 ist durch Veränderung der Lage der Polstücke 14 im Ventil 1 möglich.

Figur 8 zeigt eine alternative Ausgestaltung des Ventils 1, das einen elektromagnetischen Antrieb 10 ähnlich Figur 5 aufweist. Gleiche oder funktionsgleiche Bauteile tragen im folgenden gleiche Bezugszeichen, und es wird nur auf die Unterschiede zum bisher beschriebenen Ventil eingegangen.

Anstelle eines Hebels kommt beim Ventil 1 gemäß Figur 8 ein Betätigungsstößel 37 zum Einsatz, dessen unteres Ende zusammen mit dem Dichtkörper 34 einen Schließkörper für den Ventilsitz 38 bildet. Der Betätigungsstößel 37 ist direkt an den Anker 20 (hier ein Hubanker) angebunden. Alternativ kann hier ein Koppelstück zwischengeschaltet sein. Der Anker 20, der über eine Parallelogrammaufhängung 22 am Gehäuseteil 26b gelagert ist, führt bei Betätigung des Antriebs 10 eine annähernd lineare Hubbewegung parallel zu einer Achse A des Antriebs 10 aus, wodurch er den Betätigungsstößel 37 antreibt und den Ventilsitz 38 öffnet bzw. schließt. Hierzu ist zwischen dem in der Figur unteren Polstück 14 und dem Anker 20 ein geringer Luftspalt 44 vorgesehen, der alternativ zur gezeigten Parallelaufhängung 22 auch durch ein Kugel- oder Rollenlager realisiert werden kann. Zur Justage des Ventils kann der Abstand zwischen Anker 20 und Schließkörper, die Länge eines Koppelelements zwischen dem Betätigungsstößel 37 und dem Anker 20 oder die Lage des oberen Polstücks 14 verändert werden.

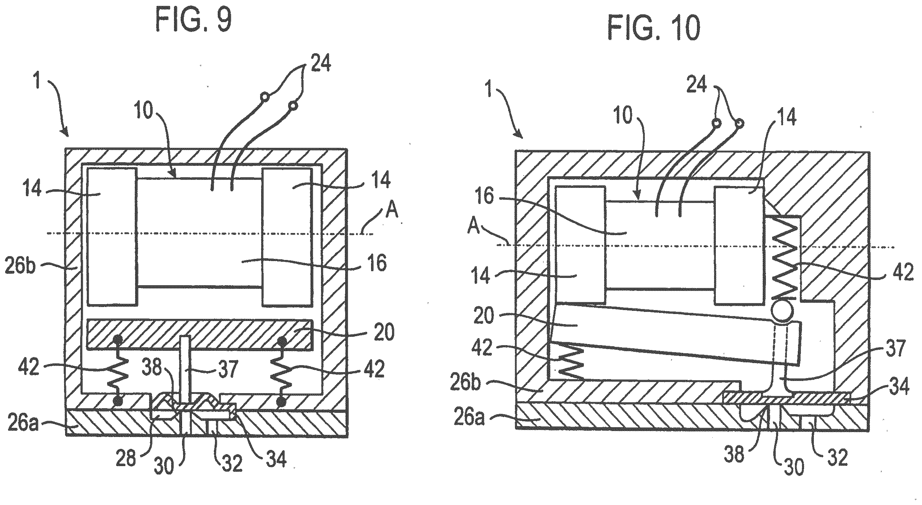

Die Figuren 9 und 10 zeigen zwei weitere Ausgestaltungen des erfindungsgemäßen Ventils 1, wobei die jeweiligen Antriebe 10 einen als Plattenanker ausgestalteten Anker 20 aufweisen. Dieser führt bei Betätigung des Antriebs 10 eine annähernd lineare Hubbewegung senkrecht zur Achse A des Antriebs aus. Der Betätigungsstößel 37 ist entweder direkt oder über ein Koppelstück an den Anker 20 angebunden. Es sind mehrere Federelemente 42 vorgesehen, die den Schließkörper in eine definierte Endlage bringen. Eine Justage des Ventils 1 erfolgt durch Veränderung des Abstands zwischen Anker 20 und Schließkörper, durch Verändern der Länge eines dazwischen angeordneten Koppelelements oder durch Verändern der Lage der Polstücke 14.

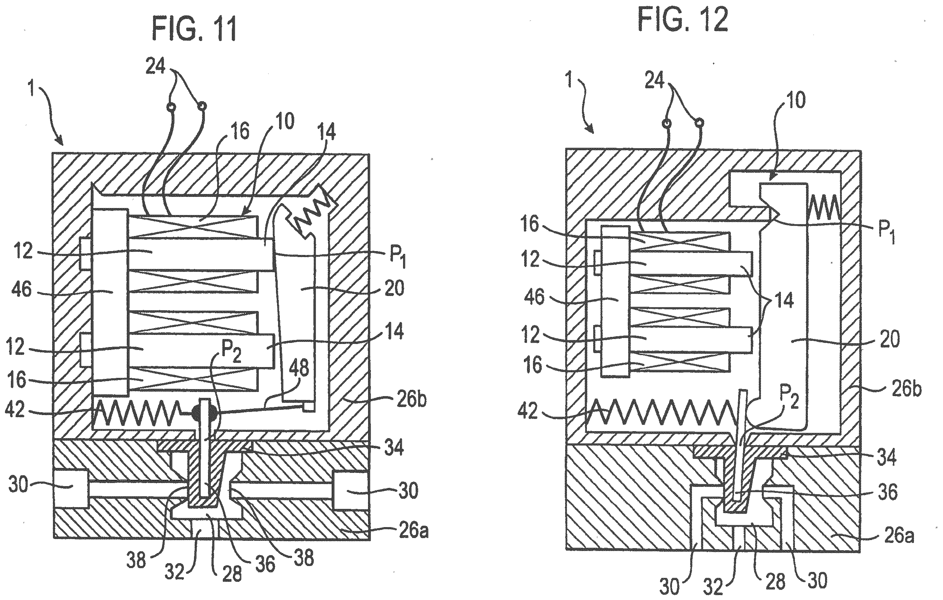

Die Figuren 11 und 12 schließlich zeigen Ventile 1 gemäß einer alternativen Ausführungsform, bei der der elektromagnetische Antrieb 10 mehrere, hier zwei, durch ein Joch 46 verbundene parallele Kerne 12 aufweist, auf denen jeweils eine Wicklung 16 aufgebracht ist. Auch hier liegt die Wicklung 16 zumindest in Richtung einer das Baumaß des Ventils 1 bestimmenden Dimension ohne eine zwischengefügte Spulenkörperwand auf dem jeweiligen Kern 12 auf. Die Kerne 12 bilden an ihrem dem Joch 46 gegenüberliegenden freien Ende je ein Polstück 14, das mit dem Anker 20 des Antriebs 10 zusammenwirkt. Bei den in den Figuren 11 und 12 gezeigten Ventilen 1 ist der Anker 20 ein Klappanker, er könnte jedoch ebenso als Plattenanker ausgeführt sein.

Ansonsten ist die Funktionsweise der Ventile 1 gemäß den Figuren 11 und 12 sehr ähnlich zum Ventil gemäß Figur 7, weshalb auf die Beschreibung hierzu verwiesen wird. Im Unterschied zum Ventil der Figur 7 ist beim Ventil gemäß Figur 11 ein Koppelelement 48 zwischen dem Betätigungshebel 36 und dem Anker 20 vorgesehen, beim Ventil gemäß Figur 12 greift der Anker 20 direkt an den Betätigungshebel 36 an. Eine Justage des Ventils kann durch Verändern des Abstands zwischen Anker 20 und Betätigungshebel 36, durch Verändern der Lage des Koppelelements 48 (sofern vorhanden) oder durch Verändern der Lage der Polstücke 14 erfolgen.

Es versteht sich, daß bei den Antrieben 10 sämtlicher Ventile der Figuren 7 bis 12 Kerne 12, Polstücke 14 und gegebenenfalls Anker 20 aus geschichteten Blechen eingesetzt werden können.

## Patentansprüche

1. Angereihter Aufbau einer Mehrzahl von Ventilen, wobei jedes Ventil flach ausgeführt ist, und jedes Ventil einen elektromagnetischen Antrieb (10) umfasst, der einen zwischen zwei Polstücken (14) angeordneten Kern (12) aufweist, auf dem eine Wicklung (16) aufgebracht ist, die nur in Richtung einer ein Baumaß des Ventils (1) bestimmenden Dimension (B) ohne zwischengefügte Spulenkörperwand auf dem Kern (12) aufliegt, **dadurch gekennzeichnet, dass** ein Anker vorgesehen ist, der außerhalb der Wicklung angeordnet ist, wobei der Anker (20) in Richtung einer anderen Dimension als derjenigen, die das Baumaß des Ventils (1) bestimmt, neben dem umwickelten Kern (12) angeordnet ist.

2. Angereihter Aufbau nach Anspruch 1, bei dem die Polstücke (14) einteilig mit dem Kern (12) ausgebildet sind.

3. Angereihter Aufbau nach Anspruch 1 oder 2, bei dem der Kern (12) und die Polstücke (14) aus geschichteten Blechen (21) ausgeführt sind.

4. Angereihter Aufbau nach einem der vorstehenden Ansprüche, bei dem die Polstücke (14) die Wicklung (16) überragen.

5. Angereihter Aufbau nach einem der vorstehenden Ansprüche, bei dem der Anker (20) ein Klappanker ist.

6. Angereihter Aufbau nach einem der Ansprüche 1 bis 4, bei dem der Anker (20) ein Plattenanker ist.

7. Angereihter Aufbau nach einem der Ansprüche 1 bis 4, bei dem der Anker (20) ein Hubanker ist.

8. Angereihter Aufbau einer Mehrzahl von Ventilen, wobei jedes Ventil flach ausgeführt ist, und jedes Ventil einen elektromagnetischen Antrieb (10) umfasst, der mehrere durch ein Joch (46) verbundene parallele Kerne (12) aufweist, auf denen jeweils eine Wicklung (16) aufgebracht ist, die nur in Richtung einer ein Baumaß des Ventils (1) bestimmenden Dimension (B) ohne zwischengefügte Spulenkörperwand auf dem Kern (12) aufliegt, **dadurch gekennzeichnet, dass** ein Anker vorgesehen ist, der außerhalb der Wicklungen angeordnet ist, wobei der Anker (20) in Richtung einer anderen Dimension als derjenigen, die das Baumaß des Ventils (1) bestimmt, neben dem umwickelten Kern (12) angeordnet ist.

9. Angereihter Aufbau nach Anspruch 8, bei dem die Kerne (12) an ihrem einem Joch (46) gegenüberliegenden, freien Ende je ein Polstück (14) bilden, wobei die mehreren Polstücke mit dem Anker (20) des Antriebs (10) zusammenwirken.

10. Angereihter Aufbau nach Anspruch 8 oder 9, bei dem der Anker (20) ein Klappanker ist.

11. Angereihter Aufbau nach Anspruch 8 oder 9, bei dem der Anker (20) ein Plattenanker ist.

12. Angereihter Aufbau nach einem der Ansprüche 8 bis 11, bei dem der Kern (12) aus geschichteten Blechen ausgeführt ist.

## Claims

1. An in-line arrangement of a plurality of vales, each valve being configured so as to be flat, and each valve comprising an electromagnetic drive (10) including a core (12) that is arranged between two pole pieces (14) and has a winding (16) applied thereon which, only in the direction of a dimension (B) determining a structural size of the valve (1), rests on the core (12) without a bobbin wall interposed, **characterized in that** an armature is provided which is arranged outside the winding, the armature (20) being arranged beside the winding-covered core (12) in the direction of a dimension other than that which determines the structural size of the valve (1).

2. The in-line arrangement according to claim 1, in which the pole pieces (14) are formed in one piece with the core (12).

3. The in-line arrangement according to claim 1 or 2, in which the core (12) and the pole pieces (14) are in the form of laminated metal sheets (21).

4. The in-line arrangement according to any of the preceding claims, in which the pole pieces (14) project over the winding (16).

5. The in-line arrangement according to any of the preceding claims, in which the armature (20) is a hinged armature.

6. The in-line arrangement according to any of claims 1 to 4, in which the armature (20) is a plate armature.

7. The in-line arrangement according to any of claims 1 to 4, in which the armature (20) is a lifting armature.

8. An in-line arrangement of a plurality of vales, each valve being configured so as to be flat, and each valve comprising an electromagnetic drive (10) including a plurality of parallel cores (12) which are connected by a yoke (46) and each have a winding (16) applied thereon which, only in the direction of a dimension (B) determining a structural size of the valve (1), rests on the core (12) without a bobbin wall interposed, **characterized in that** an armature is provided which is arranged outside the windings, the armature (20) being arranged beside the winding-covered core (12) in the direction of a dimension other than that which determines the structural size of the valve (1).

9. The in-line arrangement according to claim 8, in which the cores (12), at their respective free ends opposite a yoke (46), each form a pole piece (14), the plurality of pole pieces cooperating with the armature (20) of the drive (10).

10. The in-line arrangement according to claim 8 or 9, in which the armature (20) is a hinged armature.

11. The in-line arrangement according to claim 8 or 9, in which the armature (20) is a plate armature.

12. The in-line arrangement according to any of claims 8 to 11, in which the core (12) is in the form of laminated metal sheets.

## Revendications

1. Assemblage en série d'une pluralité de valves, chaque valve étant réalisée plane, et chaque valve comprenant un actionneur électromagnétique (10) qui présente un noyau (12) agencé entre deux pièces polaires (14), sur lequel est appliqué un enroulement (16) qui repose sur le noyau (12) sans intercaler une paroi d'armature de bobine uniquement en direction d'une dimension (B) déterminant un encombrement de la valve (1), **caractérisé en ce qu'**il est prévu un induit qui est agencé en dehors de l'enroulement, l'induit (20) étant agencé à côté du noyau (12) enroulé en direction d'une autre dimension que celle qui détermine l'encombrement de la valve (1).

2. Assemblage en série selon la revendication 1, dans lequel les pièces polaires (14) sont réalisées d'un seul tenant avec le noyau (12).

3. Assemblage en série selon les revendications 1 ou 2, dans lequel le noyau (12) et les pièces polaires (14) sont réalisées dans des tôles empilées (21).

4. Assemblage en série selon l'une des revendications précédentes, dans lequel les pièces polaires (14) dépassent l'enroulement (16).

5. Assemblage en série selon l'une des revendications précédentes, dans lequel l'induit (20) est un induit à armature mobile.

6. Assemblage en série selon l'une des revendications 1 à 4, dans lequel l'induit (20) est un induit à armature en forme de plaque.

7. Assemblage en série selon l'une des revendications 1 à 4, dans lequel l'induit (20) est un induit de levage.

8. Assemblage en série d'une pluralité de valves, chaque valve étant réalisée plane, et chaque valve comprenant un actionneur électromagnétique (10) qui présente plusieurs noyaux (12) parallèles reliés par une culasse (46), sur lesquels est appliqué un enroulement (16) respectif qui repose sur le noyau (12) sans intercaler une paroi d'armature de bobine uniquement en direction d'une dimension (B) déterminant un encombrement de la valve (1), **caractérisé en ce qu'**il est prévu un induit qui est agencé en dehors des enroulements, l'induit (20) étant agencé à côté du noyau (12) enroulé en direction d'une autre dimension que celle qui détermine l'encombrement de la valve (1).

9. Assemblage en série selon la revendication 8, dans lequel les noyaux (12) forment, à leur extrémité libre opposée à une culasse (46), une pièce polaire (14) respective, les plusieurs pièces polaires coopérant avec l'induit (20) de l'actionneur (10).

10. Assemblage en série selon les revendications 8 ou 9, dans lequel l'induit (20) est un induit à armature mobile.

11. Assemblage en série selon les revendications 8 ou 9, dans lequel l'induit (20) est un induit à armature en forme de plaque.

12. Assemblage en série selon l'une des revendications 8 à 11, dans lequel le noyau (12) est réalisé dans des tôles empilées.
